# EUROPÄISCHE PATENTSCHRIFT

(11) **EP 1 472 019 B1**
(45) Veröffentlichungstag und Bekanntmachung des Hinweises auf die Patenterteilung: **15.03.2006**
(21) Anmeldenummer: 03702182.1
(22) Anmeldetag: 16.01.2003
(51) Int. Cl.: B08B 3/08, B08B 7/00, C02F 3/20

(54) **REINIGUNGSVERFAHREN UND REINIGUNGSFLÜSSIGKEIT FÜR BELÜFTERKÖRPER**
CLEANING METHOD AND CLEANING FLUID FOR AERATION BODIES
PROCEDE DE NETTOYAGE ET LIQUIDE DE NETTOYAGE POUR CORPS DE VENTILATEUR

(30) Priorität: 17.01.2002 AT 692002
(43) Veröffentlichungstag der Anmeldung: 03.11.2004
(73) Patentinhaber: Frey, Wilhelm, 2100 Korneuburg (AT)
(72) Erfinder: Frey, Wilhelm, 2100 Korneuburg (AT)
(74) Vertreter: Kliment, Peter
(86) Internationale Anmeldenummer: PCT/AT2003/000015
(87) Internationale Veröffentlichungsnummer: WO 2003/059537

(56) Entgegenhaltungen:
- DE-A- 3 333 602
- US-A- 2 686 138
- US-A- 4 382 867
- US-A- 4 402 758
- US-A- 5 051 193
- US-A- 5 378 355
- US-A- 5 597 491

## Beschreibung

Die vorliegende Erfindung bezieht sich auf ein Verfahren zur Reinigung von Belüfterelementen in belüfteten Becken von Abwasserreinigungs- oder Wasseraufbereitungsanlagen gemäß dem Oberbegriff von Anspruch 1 sowie ein Reinigungsmittel gemäß Anspruch 9.

Anlagen zur Abwasserreinigung bestehen im wesentlichen aus folgenden Verfahrensschritten bzw. Komponenten, für die wiederum viele mögliche Ausführungsformen existieren:
- Grobreinigung des Abwassers mit Rechen, Sieb und Sandfang
- Vorklärbecken zur Sedimentation leicht absetzbarer Stoffe (optional)
- Anlage zur biologischen Phosphatelimination (optional)
- Belebungsverfahren in Form von Durchlaufanlagen (mit getrennter Belebungsstufe und Nachklärbecken), Abwasserteichen oder Aufstauanlagen ("Sequencing Batch Reactor", SBR)
- Diverse periphere Anlagen etwa zur Schlammstabilisierung, Schlammbehandlung, oder Faulgasverwertung

Die Abwasserreinigung vollzieht sich dabei hauptsächlich im Rahmen des Belebungsverfahrens. Hier wird für eine ausreichende Belüftung des Abwassers gesorgt, wodurch sich Belebtschlammflocken entwickeln. Der belebte Schlamm besteht aus Bakterien und Protozoen, diese wandeln die organischen Stoffe in mineralische Abbauprodukte, CO₂ und Wasser um und vermehren sich dabei, d.h. es entsteht neue Biomasse. Durch spezielle Bakterienarten ("Nitrifikanten") erfolgt weiters die Umwandlung von Ammonium zu Nitrit und weiter zu Nitrat. Diese Stoffumwandlungsprozesse bedürfen der Anwesenheit von Sauerstoff, der in belüfteten Becken meistens durch Einblasen von Luft mit Druckbelüftungssystemen zugeführt wird.

Druckbelüftungssysteme zur Einbringung von Sauerstoff in das belüftete Becken umfassen insbesondere Belüfterelemente, die am Boden der belüfteten Becken angeordnet sind, und in die über Druckluftgebläse und entsprechende Rohrleitungen Luft eingeblasen wird. In Sonderfällen wird auch technisch reiner Sauerstoff in das belüftete Becken eingeblasen. Die Belüfterelemente sind mit Poren oder Bohrungen versehene (z.B. perforierte Kunststoffmembran), durch die die eingeblasene Luft in Form kleiner Bläschen in das zu belüftende Medium im Becken eingebracht wird.

Beim Betrieb dieser Belüfterelemente bilden sich an den Oberflächen und in den Poren oder Bohrungen je nach Laufzeit, Belüftermodell und hydrochemischen Voraussetzungen nach durchschnittlich 1 bis 4 Jahren Ablagerungen, die nach gängiger Lehre vor allem aus Kalziumkarbonat und organischen Stoffen bestehen. Die zunehmende Verstopfung der Poren oder Bohrungen verursacht einen steigenden Druckverlust und damit einen höheren Energieaufwand für das Einblasen der Luft. Dadurch sinkt die Wirtschaftlichkeit (der Sauerstoffeintrag in kg O₂/kWh) des Belüftungssystems. Insbesondere kann der Gegendruck aufgrund verstopfter Poren oder Bohrungen so hoch werden, dass die Belüftermembranen aus ihrer Halterung schlüpfen oder reißen oder die Gebläse durch Überlastung ausfallen und damit die Reinigungsleistung der Belebungsstufe stark beeinträchtigt wird. Die Belüfterelemente müssen somit regelmäßig einer Reinigung unterzogen werden.

Ein mögliches Reinigungsverfahren sieht dabei vor, das belüftete Becken zu entleeren, die Belüfterelemente auszubauen und jedes einzelne Belüfterelement, etwa in einem Säurebad aus Salzsäure, zu waschen. Danach können die Belüfterelemente wieder eingebaut und das belüftete Becken in Betrieb genommen werden. Die dadurch erforderliche Außerbetriebnahme und Stillstandszeit des belüfteten Beckens beeinträchtigen jedoch entscheidend die Verfügbarkeit und die Wirtschaftlichkeit der Gesamtanlage.

Es sind daher auch Verfahren bekannt, bei denen bei eingebauten Belüfterelementen Chlor oder Chlorwasserstoff in Gasform in das Druckbelüftungssystem eingeblasen wird. DE 33 33 602 A1 offenbart ein Verfahren, bei dem in periodischen Zeitabständen Ameisensäure in die verdichtete Luft dosiert wird, die Kalkablagerungen in den Poren oder Bohrungen bzw. auch teilweise an den wasserseitigen Membranoberflächen löst.

US 5 597 491 und US 5 378 355 sehen vor, das Belüfterfeld mit einem separaten Rohrsystem zu versehen, über das eine Reinigungsflüssigkeit an die Belüfterelemente herangeführt wird. Säuren werden hierbei als bevorzugte Reinigungsflüssigkeit genannt, insbesondere Chlorwasserstoff. Diese Lösung zur Reinigung der Belüfterelemente ist allerdings aufwändig und teuer.

In US 5 051 193 wird vorgeschlagen, zur Reinigung von Belüfterelementen das Belüfterfeld kurzzeitig mit einer sauren Lösung, vorzugsweise eine Lösung von Chlorwasserstoff, zu befüllen.

Bei der Verwendung von sauren Reinigungsmitteln, insbesondere von Chlor oder Chlorwasserstoff, das in Gasform oder als Flüssigkeit in das Druckbelüftungssystem eingebracht wird, wurde aber eine erhöhte Korrosion der Rohre und der Verteiler festgestellt. Überdies besteht bei diesen Verfahren die Gefahr, dass Bakterienkulturen im belüfteten Becken zerstört und somit die biologische Reinigung des Wassers beeinträchtigt wird.

Auch aufgrund notwendiger Sicherheitsmaßnahmen für den Umgang mit Chlor oder Chlorwasserstoff erweisen sich diese Verfahren in der Praxis als kostspielig.

Des weiteren haben jüngste Untersuchungen an mehreren Anlagen gezeigt, dass im Gegensatz zur gängigen Lehre nicht Erdalkalicarbonate (vor allem eben Kalk) und/oder organische Substanzen (z.B. die durch Mikroorganismen aufgebaute Biomasse) hauptverantwortlich für die Gegendruck steigernden Verstopfungen in den Poren oder Bohrungen sind, sondern vielmehr gefällte bzw. teilweise auch auskristallisierte anorganische Verbindungen wie (Erd-)Alkali-(alumino-)Silikate und Erdalkali-Orthophosphate sowie Kieselsäure-Hydrat. Ein saures Reinigungsmittel vermag solche Ablagerungen nicht zu lösen.

Gegenstand der Erfindung ist somit ein Verfahren, das auch den Einsatz alternativer und auf die jeweils auftretenden Ablagerungen abgestimmte Reinigungsmittel erlaubt. Es ist hierbei vorgesehen, das gesamte Belüfterfeld bestehend aus den Belüfterelementen und den sie verbindenden Rohrleitungen mit einem Reinigungsmittel in flüssiger Form vollständig zu befüllen, wobei durch den hydrostatischen Druck, über die Reinigungsmittelpumpen oder die Luftgebläse ausreichend Druck erzeugt wird, um das Reinigungsmittel durch die Poren oder Bohrungen der Belüftermembran zu pressen. Nach einer variablen Einwirkzeit wird das Belüfterfeld mittels Druckluft wieder entleert. Dieser Vorgang kann mehrmals wiederholt und auch bei gefülltem Becken vorgenommen werden. Gemäß Anspruch 1 ist vorgesehen, dass das Reinigungsflüssigkeit ein Mittel zur Sicherstellung eines alkalischen Milieus mit einem pH-Wert von mindestens 10, vorzugsweise 12, enthält. Der Verwendung alkalischer Reinigungsmittel wurde gemäß dem Stand der Technik keinerlei Beachtung geschenkt, weil aufgrund unzureichenden Wissens über die Zusammensetzung der Ablagerungen in den Poren oder Bohrungen die Verwendung von gasförmigen Säuren oder Oxidationsmitteln als vollkommen ausreichend erschien. Zudem ist es übliche Lehre, das Belüfterfeld weitgehend trocken zu halten, etwa um Schäden an den Rohrleitungen wie Korrosion zu vermeiden.

Bei Reinigungsflüssigkeiten gemäß Anspruch 1 der Erfindung hat sich des weiteren gezeigt, dass das Risiko einer Beeinträchtigung des Rohrleitungssystems vernachlässigbar ist. Immerhin ist es ausreichend, das Belüfterfeld nur etwa eine Stunde mit dem erfindungsgemäßen Reinigungsmittel zu fluten, worauf die Poren oder Bohrungen der Belüftermembran weitestgehend gereinigt sind und die Anlage wieder jahrelang einsetzbar ist. Dies ist insbesondere dadurch möglich, dass die Zusammensetzung der erfindungsgemäßen Reinigungsflüssigkeit auf die jüngsten Erkenntnisse über die Natur der Ablagerungen Rücksicht nimmt und auch Ablagerungen wie (Erd)Alkali-(alumino-) Silikate und Erdalkali-Orthophosphate sowie Kieselsäure-Hydrat zu lösen vermag.

Die Ansprüche 2 bis 7 betreffen vorteilhafte Durchführungsformen des erfindungsgemäßen Verfahrens und die Ansprüche 9 und 10 vorteilhafte Ausführungen des erfindungsgemäßen Reinigungsmittels. Anspruch 8 beansprucht die Verwendung einer Reinigungsflüssigkeit enthaltend ein Mittel zur Sicherstellung eines alkalischen Milieus mit einem pH-Wert von mindestens 10, vorzugsweise 12, zur Reinigung von mit Poren oder Bohrungen versehenen Belüfterelementen in belüfteten Becken von Abwasserreinigungs- oder Wasseraufbereitungsanlagen.

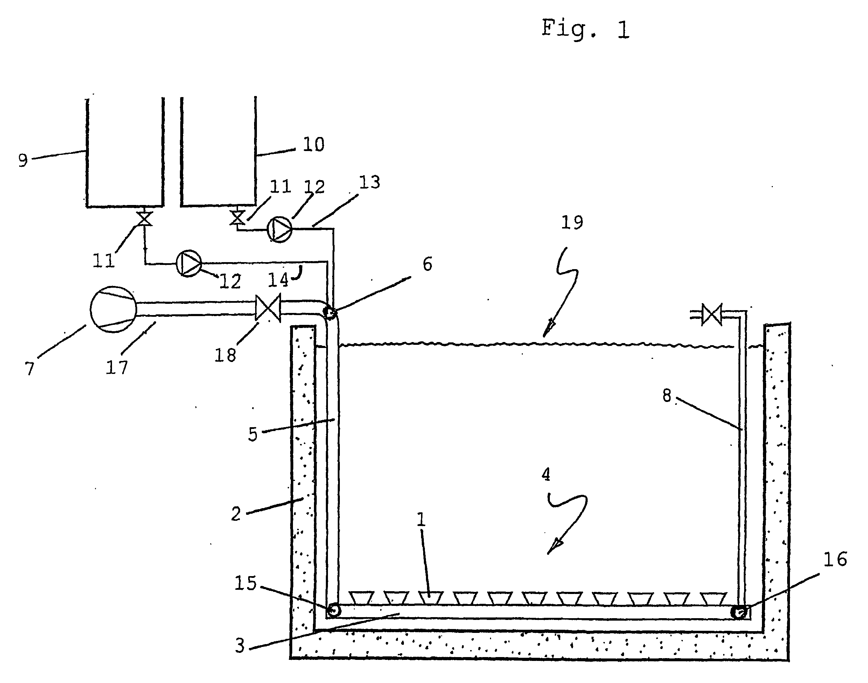

Die Erfindung wird nun anhand der beiliegenden Figur 1 näher erläutert.

Figur 1 zeigt dabei eine schematische Skizze eines belüfteten Beckens 2, in dessen Bodennähe sich das Belüfterfeld 4 befindet. Das Belüfterfeld 4 besteht hierbei aus den Belüfterelementen 1 sowie den sie verbindenden Rohrleitungen 3. In Fig. 1 ist lediglich ein Belüfterfeld mit einer Reihe an Belüfterelementen 1 sowie ein Rohr 3 dargestellt, es können aber mehrere Belüfterfelder mit parallel angeordneten Rohren 3 und der durch sie versorgten Belüfterelemente 1 vorhanden sein. Die Belüfterelemente 1 sind mit einer perforierten Membran bzw. Fritten mit Poren oder Bohrungen ausgestattet.

Das Belüfterfeld 4 ist über zusätzliche Rohrleitungen mit einem Gebläse 7 verbunden, wobei die konkrete Ausführungsform und die Führung der Rohrleitungen selbstverständlich variieren kann.
Ein möglicher Aufbau der Verrohrung ist in Figur 1 dargestellt. Vom Gebläse 7 führt eine Hauptluftleitung 17 mit Absperrklappe 18 zum belüfteten Becken 2. An der Beckenkrone wird die Verteilleitung 6 längs des Beckens 2 geführt. Dort zweigen die Fallrohre 5 zum Belüfterfeld 4 ab. Die Fallrohre 5 münden in ein parallel zur Beckenwand geführtes Verteilrohr 15 wo die Stichleitungen 3 im rechten Winkel abzweigen. An den Stichleitungen 3 sind die Belüfterelemente 1 montiert.

Die Art der Rohrführung kann aber unterschiedliche Ausführungen aufweisen und wird sich nach den technischen Erfordernissen der konkreten Anlage richten. Der entscheidende Punkt liegt darin, ein oder mehrere Gebläse 7 mit den im belüfteten Becken 2 angeordneten Belüfterelementen 1 über Rohrleitungen in zweckmäßiger Art zu verbinden.

Weiters können Entwässerungsleitungen 8 vorgesehen sein, die bei normalem Betrieb des belüfteten Beckens dazu dienen, das in die Belüfterelemente 1 und die Rohrleitungen 3 eingedrungene Wasser abzuleiten. Die Entwässerungsleitungen 8 können etwa von einem Sammelrohr 16 abzweigen, in das die parallelen Rohrleitungen 3 einmünden.

Bei Betrieb der Anlage befindet sich im belüfteten Becken 2 Abwasser 19, wo es mikrobiologischer Aktivität unterworfen wird. Die dazu notwendige Belüftung des Abwassers wird von einem Gebläse 7 bewerkstelligt, das Luft oder Sauerstoff mit Druck in ein Rohrleitungssystem presst, so dass das eingebrachte Gas auf die Belüfterelemente 1 verteilt wird. Bei zunehmender Verstopfung der Poren oder Bohrungen der Belüfterelemente 1 steigt der Gegendruck und der Wirkungsgrad der Belüfteranlage sinkt entscheidend. Die Ablagerungen wurden nach gängiger Lehre als Erdalkalikarbonate identifiziert und die Reinigungsverfahren daher auch auf die Entfernung von Erdalkalikarbonaten abgestimmt. Wie jüngste chemische Analysen sowie Untersuchungen mit Elektronenstrahlmikrosonden gezeigt haben, finden sich an und in den Poren oder Bohrungen der Belüftermembranen vielmehr auch gefällte bzw. auskristallisierte anorganische Verbindungen wie (Erd-)Alkali-(alumino-) Silikate und Erdalkali-Orthophosphate sowie Kieselsäure-Hydrat. Das erklärt, warum die Reinigung der Belüftermembranen mit Hilfe herkömmlicher Verfahren nur unzureichend gelang und dadurch nach einer Reinigung eine neuerliche Verstopfung verhältnismäßig rasch eintrat. Eine Reinigung der Poren oder Bohrungen kann jedoch mit Hilfe des erfindungsgemäßen Verfahrens sowie der erfindungsgemäßen Reinigungsflüssigkeit rasch und ohne Notwendigkeit der Entleerung des belüfteten Beckens 2 erfolgen.

Die erfindungsgemäße Reinigungsflüssigkeit basiert auf einer starken Lauge mit pH-Werten von mindestens 10, vorzugsweise aber über 12. Das wird etwa durch Zugabe von Kaliumhydroxid in einer Menge von 0.1 bis 15 Gew% (Gewichtsprozent), vorzugsweise 2.5 Gew%, erreicht. Vorzugsweise beinhaltet es weiters ein Mittel, das mit Erdalkali-Ionen in Wasser gelöste Komplexe bildet und so die Ausscheidung von Erdalkali-(alumino-) Silikaten, Erdalkali-Orthophosphaten, aber auch von Erdalkalikarbonaten verhindert. Dazu eignen sich anorganische und organische Komplexbildner, etwa EDTA (Ethylendiamintetraessigsäure), die in Form von EDTA-Natriumsalz in Mengen von 0.05 bis 5 Gew%, vorzugsweise 3%, beigemengt werden.

Die Ablagerungen in den Poren oder Bohrungen der Membran stellen oft harte Krusten dar, deren Zersetzung über chemische Vorgänge allein längere Zeit in Anspruch nehmen würde. Deshalb sieht eine weitere Ausführungsform des erfindungsgemäßen Reinigungsmittels einen zusätzlichen mechanischen Reinigungseffekt vor, der durch Beimengung von Wasserstoffperoxid (H₂O₂) in Mengen von 0.1 bis 10 Gew%, vorzugsweise 4 Gew%, bewerkstelligt wird. Unter den alkalischen Bedingungen innerhalb der Reinigungsflüssigkeit kommt es zu einer Zersetzung des Wasserstoffperoxids unter Freisetzung von molekularem Sauerstoff. Da das erfindungsgemäße Reinigungsmittel unter Druck in die Belüfterelemente und durch die Poren oder Bohrungen gepresst wird, tritt die Reinigungsflüssigkeit und das darin enthaltene Wasserstoffperoxid in freie Räume zwischen Membranporen oder Bohrungen und den Ablagerungen ein, was durch Beimengung eines Tensids zur Herabsetzung der Oberflächenspannung erleichtert wird. Im Kontakt mit den Oberflächen der Ablagerungen kommt es zu einer starken Zersetzung des Wasserstoffperoxids und einer starken Freisetzung von Sauerstoff, was zu einer effektiven Konvektion führt. Im Zuge der Konvektionsbewegung werden schließlich Teile der Ablagerungen abgerissen und die Poren oder Bohrungen somit rasch gereinigt. Ein entsprechender Katalysator, der in Mengen von 0.001 bis 0.5 Gew%, vorzugsweise 0.02 Gew%, beigemengt wird, beschleunigt dabei die Zersetzung des Wasserstoffperoxids. Das Tensid ist bevorzugt nichtschäumend und wird in Menge von 0.01 bis 2 Gew%, vorzugsweise 0.1 Gew%, zugesetzt. Um die Reinigungsflüssigkeit längere Zeit lagern zu können, muss das Wasserstoffperoxid getrennt zu der das Kaliumhydroxid, den Komplexbildner, das Tensid und den H₂O₂-Katalysator enthaltenden, alkalischen Zusammensetzung aufbewahrt werden. Die o.g. Mengenangaben in Gew% beziehen sich in diesem Fall auf das jeweilige Gesamtgewicht der beiden einzelnen Komponenten.

Für die Anwendung des erfindungsgemäßen Reinigungsverfahrens ist es nun notwendig, zwei Behälter 9, 10 vorzusehen, von denen einer die oben beschriebene alkalische Zusammensetzung mit dem Kaliumhydroxid, Komplexbildner, Tensid und H₂O₂-Katalysator enthält und der zweite das Wasserstoffperoxid. Die Vermengung beider Komponenten wird erst innerhalb des zu den Belüfterelementen 1 führenden Rohrleitungssystems vorgenommen. Dazu kann für die Ablaufleitungen 13, 14 aus den Behältern 9, 10 etwa ein Y-Anschlussstutzen vorgesehen sein, der in die Verteilleitung 6 mündet. Dabei wird es zweckmäßig sein, die Ablaufleitungen 13, 14 mit Absperrarmaturen 11 und Pumpen 12 auszustatten.

Soll eine Reinigung der Belüfterelemente 1 durchgeführt werden, wird bei befülltem oder entleertem belüfteten Becken 2 die Druckluftzufuhr vom Gebläse 7 unterbrochen, die Absperrarmaturen 11 zu den Behältern 9, 10 geöffnet und die Pumpen 12 in Betrieb genommen. Dadurch werden die beiden Komponenten der erfindungsgemäßen Reinigungsflüssigkeit aus ihren jeweiligen Behältern 9, 10 in die Ablaufleitungen 13, 14 und, je nach Art der Feldverrohrung, etwa in die Verteilleitung 6 gepumpt. Es kommt im folgenden zu einer Vermischung der beiden Komponenten der erfindungsgemäßen Reinigungsflüssigkeit und zu deren Transport zu den Rohrleitungen 3 und den Belüfterelementen 1. Die von den Pumpen 12 verursachten Druckverhältnisse sind dabei so gewählt, dass es zu einem Durchtritt der Reinigungsflüssigkeit durch die Poren oder Bohrungen der Belüftermembran kommt, wo sich die Reinigungswirkung nun entfalten kann. Zur Sicherstellung eines geeigneten Kontaktes sowie einer geeigneten Durchströmung der Poren oder Bohrungen mit der Reinigungsflüssigkeit kann auch vorgesehen sein, im Abstand von etwa 5 bis 10 Minuten die Druckluftzufuhr zum Belüfterfeld 4 aus dem Gebläse 7 zu öffnen.

Die erforderliche Einwirkzeit hängt zwar vom Verschmutzungsgrad der Membranporen oder Bohrungen ab, wird aber in der Regel unter einer Stunde betragen. Danach kann das Belüfterfeld 4 durch Öffnen der Druckluftzufuhr aus dem Gebläse 7 wieder entleert werden, wobei die Entleerung aus den Entwässerungsleitungen 8 oder ausschließlich aus den Belüfterelementen 1 erfolgen kann. Die in der Reinigungsflüssigkeit enthaltenen Stoffe werden dabei in einer Konzentration eingesetzt, die insbesondere nach Verdünnung auf das gesamte Volumen des im belüfteten Becken 2 befindlichen Abwassers 19 nicht toxisch auf die dort lebenden Mikroorganismen wirken und auch keine Beeinträchtigung der Ablaufqualität des gereinigten Abwassers hervorrufen.

Die Erfindung soll nun anhand zweier Ausführungsbeispiele näher beschrieben werden.

### Beispiel 1:

Die Abwasserreinigungsanlage einer am Meer gelegenen Großstadt ist für rund 4 Millionen Einwohnergleichwerte ausgebaut. Das Abwasser stammt aus Haushalten, sowie Industrie- und Gewerbebetrieben. Die Abwasserzusammensetzung entspricht überwiegend derjenigen häuslichen Abwassers. Auffällig sind die hohen Salzgehalte, die durch Eintritt von salzhaltigem Grundwasser (Meerwasser) verursacht werden. Die Anlage besteht aus drei Linien. Jede Linie besteht aus zwei Doppelbecken, mit 28 Meter Breite und 145 Meter Länge. Das Gesamtvolumen beträgt ca. 280 000 m³. Für die Belüftung sind in den 12 Becken rund 22000 Belüfterelemente installiert. Die Becken werden kontinuierlich belüftet, ein Abstellen der Belüftung ist nicht vorgesehen. Durch Stromausfälle kommt es jedoch immer wieder zum Ausfall der Gebläse und damit zu unbelüfteten Phasen. Nachdem die Linie 1 in Betrieb genommen wurde, kam es nach ca. 1,5 Jahren Betriebszeit zu einer massiven Verschlechterung des Blasenbildes. Bei einer Entleerung des Beckens wurde festgestellt, dass die Membranen teilweise aus den Belüfterelementen (konkret aus den Halteringen) geschlüpft waren.

Eine Untersuchung der Membranen mittels nasschemischer Methoden, Pulverdiffraktometrie sowie Elektronenstrahlmikrosonden-Untersuchungen hat ergeben, dass es zu Mineralausscheidungen in den Membranporen und an den Membranoberflächen kommt. Die teilweise kristallinen Stoffe sind dem System Erdalkali-Aluminium-Ortophosphat-Silikat zuzuordnen. Der Betreiber der Anlage hatte die Membranen dieser Linie einer mechanischen Reinigung und einer Waschung mit Salzsäure unterzogen. Eine Elektronenstrahlmikrosonden-Untersuchung dieser so gereinigten Membranen hatte gezeigt, dass Erdalkaliphosphate entfernt werden konnten, jedoch die Silikate bzw. amorphe Kieselsäure weiterhin in den Poren verblieben sind. Das Becken, in dem die so gereinigten Membranen montiert waren, wurde vom Betreiber etwa einen halben Meter mit Wasser gefüllt und 3 Wochen lang belüftet. Dadurch kam es durch Algenwuchs zu massiven Kalkausscheidungen und einer zusätzlichen Verstopfung der Membranporen mit Kalzium-(Magnesium-) Karbonaten. Aufgabe einer Probereinigung eines Belüfterfeldes bzw. mehrerer Belüfterfelder dieses Beckens war es, sowohl die neu hinzugekommenen Kalkausscheidungen, als auch die verbliebenen Silikatverstopfungen zu entfernen. Die Reinigung wurde bei entleertem Becken durchgeführt.

In Vorversuchen wurden die Bestandteile der Reinigungslösung ermittelt, sowie die Beständigkeit der mit der Reinigungslösung in Kontakt gelangenden Materialien getestet. Zur Messung des Reinigungserfolges wurde zwischen der Verteilleitung und der Fallleitung eine Messeinrichtung für den Luftmassenstrom und den Druck installiert. Es wurde ein Feld mit 170 Belüftern mit rund 6 m³ Luft pro Belüfter und Stunde beaufschlagt. Der Gegendruck am oberen Ende des Fallrohres wurde zu 9,5 kPa gemessen. Nun wurde das Belüfterfeld im freien Gefälle mit saurer Reinigungslösung (1.4 Mol pro Liter Salpetersäure, HNO₃) befüllt. Während einer 40minütigen Einwirkzeit wurde die Luftzufuhr mehrfach geöffnet, um die Reinigungslösung durch die Poren zu drücken und damit dort Ihre Wirkung entfalten zu lassen. Das Entleeren des Belüftungsfeldes erfolgt durch Öffnen der Luftzufuhr über die geöffnete Entwässerungsleitung und teilweise auch über die Belüfter. Nun wurde wieder ein Luftdurchsatz von etwa 6 m³ pro Stunde und Belüfter eingestellt und der Gegendruck zu 8,0 kPa gemessen. Im nächsten Schritt des Reinigungsvorganges wurde eine aus 2 Komponenten bestehende Reinigungslösung im freien Gefälle in die Belüfterfeld-Verrohrung geleitet. Die erste Komponente der Reinigungslösung bestand aus 25 kg Kaliumhydroxid, ca. 30 kg BASF Trilon B (Na-EDTA), ca. 1 kg eines nichtschäumenden Tensides (BASF Plurafac LF 431) und etwa 200 g eines Katalysators zur kontrollierten Wasserstoffperoxidzersetzung. Diese Komponenten wurden teils vorgelöst, teils direkt auf ein Gesamtvolumen von 1000 Litern ergänzt. Die zweite Komponente war 75 kg Wasserstoffperoxid (50%ig), aufgefüllt auf 1000 Liter. Während der Einwirkzeit von ca. 50 Minuten wurde die Luftzufuhr mehrfach geöffnet und anschließend neue Reinigungslösungen nachgefüllt. Dadurch konnte die Reinigungslösung durch die Poren oder Bohrungen gedrückt und mit den Ablagerungen in Kontakt gebracht werden. Anschließend wurden die Reinigungslösungen durch Öffnen der Luftzufuhr über die Entwässerungsleitungen und die Belüfterelemente aus dem System verdrängt. Im Anschluss an die Reinigung wurde das Belüfterfeld mit Spülwasser im freien Gefälle befüllt und die Luftzufuhr mehrfach für 1 bis 5 Minuten geöffnet und anschließend Spülwasser ergänzt. Des Entleeren des Belüftungsfeldes erfolgte wieder durch Öffnen der Luftzufuhr, teilweise über die Entwässerungsleitungen, aber auch über die Belüfterelemente. Anschließend wurden die Belüfterelemente ca. 1 Stunde mit einem Luftdurchsatz von 6 m³ pro Belüfter und Stunde beaufschlagt. Der Gegendruck betrug nunmehr 5,6 kPa.

Die Reinigungslösungen wurden in 1 m³ Vorlagebehältern angesetzt. Zum Lösen der teilweise festen Bestandteile wurde ein 110 Liter Gefäß mit einer Umwälzpumpe verwendet. Die Verbindung zwischen den Vorlagebehältern und der Verrohrung erfolgte mit Schläuchen.

Der Druckverlust eines neuen Belüfterelements liegt nach Herstellerangaben, bei einem Luftdurchsatz von ca. 6 m³ pro Belüfter und Stunde, bei ca. 4,0-4,5kPa, wobei in Betracht zu ziehen ist, dass bei der Druckmessung für das gesamte Belüfterfeld der Gegendruck der Messstrecke (Luftmassenmessung, mit zwei 90° und einem 180°-Bögen), der Fallleitung (ca. 8 m) und der horizontalen Verteilerleitungen miterfasst wird. (Durch die Reinigung konnte der Gegendruck somit um 41 % reduziert werden.)

Die Reinigung aller in einem Teilbecken befindlichen Belüfterelemente im Betrieb mittels Reinigungslösungen benötigt ca. 14 Tage. Bei mechanischer Reinigung bzw. Reinigung der Membranen im ausgebauten Zustand mittels Reinigungslösungen benötigt man für die Reinigung des Beckens ca. 5 Wochen und nochmals 5 - 8 Wochen für die Demontage, Reinigung und Wiedermontage der Membranen. Also in Summe mindestens 2 - 3 Monate.

### Beispiel 2:

In der Belebungsstufe einer industrieellen Abwasserreinigungsanlage werden Mineralölanteile des Abwassers mit dem Belebungsverfahren abgebaut. Die Belebungsstufe besteht aus zwei gleich großen Teilbecken "Ost" und "West") die abwechselnd mit Abwasser beschickt werden. Die Abwassermenge beträgt ca. 1000 m³/h. Der Zulauf hat eine besonders hohe Salzkonzentration von ca. 12500 mg/l Chlorid. Der BSB₅ (Biochemischer Sauerstoffbedarf in 5 Tagen) im Zulauf beträgt ca. 150 mg/l, jener im Ablauf ca. 30 mg/l. Kohlenstoff und Stickstoff sind im Abwasser ausreichend vorhanden, Phosphor muss zugegeben werden. Das Gesamtvolumen der beiden Teilbecken beträgt 7400 m³, die Belüftung erfolgt mit 4420 Tellerbelüftern. Je Teilbecken sind 13 Felder mit je 170 Tellerbelüftern installiert. Der Betrieb der Becken erfolgt nach dem SBR-Prinzip. Ein Zyklus dauert 180 Minuten. Im Becken "Ost" wird zunächst für 75 Minuten belüftet, anschließend wird die Belüftung abgestellt und der Belebtschlamm 15 Minuten sedimentiert. Nun folgt die Beschickungsphase, welche ebenfalls 90 Minuten dauert. Während der Belüftungs- und Absetzphase im Becken "Ost" wird Becken "West" beschickt, wenn im Becken "Ost" die Beschickungsphase beginnt, wird im Becken "West" belüftet. Der Zulauf wird nicht unterbrochen sondern nur durch Schieber entweder auf das Becken "Ost" oder Becken "West" geleitet.

In Vorversuchen, in einer Pilotanlage, die ca. 18 Monate gedauert haben, wurde kein negativer Einfluss auf die Belüftermembranen, d.h. kein steigender Gegendruck, festgestellt. Nach Einbau der Belüfterelemente in die Becken und 6 Monaten Betriebszeit war der Systemdruck aber um ca. 8,O kPa gestiegen. Nach einer Beckenleerung und Zerlegung von Belüfterelementen wurden in den Drosselbohrungen der Kunststoffkörper Salzkristalle (99 % Natriumchlorid) gefunden. Eine Untersuchung, ob und welche Verstopfungen in den Poren der Membran vorhanden waren, ist nicht erfolgt. Die Anwesenheit von den dem Abwasser zugesetzten Zeolithen ist erwiesen, ein Anteil an gefällten Silikaten aufgrund der bisherigen Erfahrungen (mit vergleichbaren Anlagen) wahrscheinlich.
Zur Erprobung des Verfahrens zur Beseitigung der Verstopfungen wurde ein Belüfterfeld des Teilbeckens "Ost" gereinigt. Das Belebungsbecken "Ost" war zu diesem Zweitpunkt voll gefüllt. Vor der Reinigung wurde in Laborversuchen die Beständigkeit der Materialien der Belüfterelemente und der Verrohrung gegen die Reinigungslösungen getestet. Da die gesamte Feldverrohrung aus Kunststoff besteht, wurde spezielles Augenmerk auf die Klebestellen des Rohrsystems gerichtet. Zur Feststellung des Erfolges (Reduktion des Druckverlustes) wurde eine gesonderte Luftversorgung des zu reinigenden Belüfterfeldes installiert (1,9 m³/h/Belüfter). Nach Entwässerung des Feldes wurde der Differenzdruck mit 47,1 kPa gemessen. Im Neuzustand sollte der Druck unter diesen Bedingungen ca. 40,0 kPa betragen.

Die Reinigungslösungen wurden in zwei Containern angemischt. In einem wurden 24 kg Kaliumhydroxid (ca. 35 %ig, härtestabilisiert) und 1 Liter Katalysatorlösung auf ca. 500 1 Nutzwasser zugegeben und auf 900 1 aufgefUllt. Im zweiten Container wurden ebenfalls ca. 500 1 Nutzwasser vorgelegt, 60 kg Wasserstoffperoxid (30 %ig) zugegeben und auf 900 1 aufgefüllt. Die Befüllung der Feldverrohrung (mit Pumpen) erfolgte über einen Y-Anschlussstutzen in die Verteilleitung und von dort in die Fallleitung. Die beiden Pumpen in den Behältern wurden gleichzeitig in Betrieb genommen und darauf geachtet, dass die Zugabe möglichst gleichmäßig erfolgte. Es wurden aus jedem Behälter ca. 600 1 herausgepumpt. Danach wurden die Pumpen abgestellt, die Luftklappe in der Fallleitung und die Hähne am Y-Stück der Pumpleitungen geschlossen. Bereits wenige Minuten nach der Einleitung konnten an der Beckenoberfläche aufsteigende Gasblasen beobachtet werden (frei gesetzter Sauerstoff aus dem Peroxid). Am Anfang war das "Blasenbild" noch sehr ungleichmäßig. Nach 10 Minuten wurde aus jedem Behälter ca. 50 1 nachgepumpt. Hier ist es wichtig, dass als erstes die Pumpen eingeschaltet werden und erst dann die Luftklappe und die Pumpleitung geöffnet werden, sonst kommt es zu Gasaustritt über die Pumpleitungen. Das Nachpumpen wurde insgesamt 5 mal wiederholt. Nach einer Stunde Einwirkzeit wurde die Feldverrohrung über die Entwässerungsleitung entleert. Eine Beprobung der abgeleiteten Reinigungslösung ergab eine aufgelöste Salzfracht von ca. 2 kg, dies entspricht ca. 12 g je Belüfter. Nachdem die Reinigungslösung abgeleitet war, wurde die Verrohrung noch einmal mit Nutzwasser geflutet und über die Entwässerungsleitung entleert (Nachwaschung). Nun wurde das Belüfterfeld wieder mit dem Luftvolumenstrom der externen Luftversorgung beaufschlagt und der-Differenzdruck zu 42,0 kPa gemessen. Der Vergleich der beiden, mit der gleichen Luftbeaufschlagung gemessenen Differenzdrücke zeigt eine Reduktion des Druckverlustes von 5,1 kPa.

## Patentansprüche

1. Verfahren zur Reinigung von mit Poren oder Bohrungen versehenen Belüfterelementen (1) in belüfteten Becken (2) von Abwasserreinigungs- oder Wasseraufbereitungsanlagen, bei dem das von den Belüfterelementen (1) und den sie verbindenden Rohrleitungen (3) gebildete Belüfterfeld (4) einer Reinigungsflüssigkeit ausgesetzt wird, das über zusätzliche Rohrleitungen, wie etwa Fallleitungen (5), die das Belüfterfeld (4) mit einer Verteilleitung (6) verbinden, zugeführt wird, und ein Reinigungsschritt vorgesehen ist, bei dem das Belüfterfeld (4) mit der Reinigungsflüssigkeit und unter Druckverhältnissen, die den Durchtritt der Reinigungsflüssigkeit durch die Poren oder Bohrungen der Belüfterelemente (1) bewirken, befüllt wird, und in einem weiteren Reinigungsschritt nach einer variablen Einwirkzeit der Reinigungsflüssigkeit auf die Poren oder Bohrungen der Belüfterelemente (1) das Belüfterfeld (4) wieder entleert wird, **dadurch gekennzeichnet, dass** die Reinigungsflüssigkeit ein Mittel zur Sicherstellung eines alkalischen Milieus mit einem pH-Wert von mindestens 10, vorzugsweise 12, enthält.

2. Verfahren nach Anspruch 1, **dadurch gekennzeichnet, dass** es sich bei dem Mittel zur Sicherstellung eines alkalischen Milieus um Kaliumhydroxid (KOH) handelt.

3. Verfahren nach Anspruch 1 oder 2, **dadurch gekennzeichnet, dass** die Reinigungsflüssigkeit zusätzlich Kombinationen von
- einem Mittel, das zur Verhinderung der Ausscheidung von Erdalkalicarbonaten mit Erdalkali-Ionen in Wasser gelöste Komplexe bildet, vorzugsweise anorganische oder organische Komplexbildner wie EDTA (Ethylendiamintetraessigsäure),
- einem Katalysator zur Zersetzung von anorganischen Peroxiden, sowie
- einem Mittel zur Verminderung der Oberflächenspannung des Wassers, vorzugsweise nicht-schäumende und alkalibeständige Tenside
enthält, die mit dem Mittel zur Sicherstellung eines alkalischen Milieus eine erste Komponente bilden, und wahlweise eine zweite Komponente enthaltend wasserlösliche anorganische Peroxide, vorzugsweise Wasserstoffperoxid (H₂O₂), enthält.

4. Verfahren nach Anspruch 3, **dadurch gekennzeichnet, dass** die erste Komponente der Reinigungsflüssigkeit in der Zusammensetzung
| | |
|---|---|
| KOH: | 0.1 bis 15 Gewichtsprozent (bezogen auf das Gesamtgewicht der ersten Komponente), vorzugsweise 2.5 Gew% |
| EDTA-Natriumsalz: | 0.05 bis 5 Gewichtsprozent (bezogen auf das Gesamtgewicht der ersten Komponente), vorzugsweise 3 Gew% |
| Anorganischer Katalysator: | 0.001 bis 0.5 Gewichtsprozent (bezogen auf das Gesamtgewicht der ersten Komponente), vorzugsweise 0.02 Gew%% |
| Nichtschäumende Tenside: | 0.01 bis 2 Gewichtsprozent (bezogen auf das Gesamtgewicht der ersten Komponente), vorzugsweise 0.1 Gew% |
und die zweite Komponente in einer Menge von 0.1 bis 10 Gewichtsprozent (bezogen auf das Gesamtgewicht der zweiten Komponente), vorzugsweise 4 Gew%, zur Anwendung kommt.

5. Verfahren nach einem der Ansprüche 1 bis 4, **dadurch gekennzeichnet, dass** zur Entleerung des Belüfterfeldes (4) die Reinigungsflüssigkeit über eine Entwässerungsleitung (8) ausgetragen wird.

6. Verfahren nach Anspruch 5, **dadurch gekennzeichnet, dass** die Entleerung des Belüfterfeldes (4) durch Druckluftzufuhr aus einem Gebläse (7) erfolgt.

7. Verfahren nach Anspruch 5 oder 6, **dadurch gekennzeichnet, dass** während der Einwirkzeit die Druckluftzufuhr des Gebläses (7) in das Belüfterfeld (4) kurz geöffnet wird.

8. Verwendung einer Reinigungsflüssigkeit enthaltend ein Mittel zur Sicherstellung eines alkalischen Milieus mit einem pH-Wert von mindestens 10, vorzugsweise 12, zur Reinigung von mit Poren oder Bohrungen versehenen Belüfterelementen (1) in belüfteten Becken (2) von Abwasserreinigungs- oder Wasseraufbereitungsanlagen.

9. Reinigungsflüssigkeit zur Reinigung von mit Poren oder Bohrungen versehenen Belüfterelementen (1) in belüfteten Becken (2) von Abwasserreinigungs- oder Wasseraufbereitungsanlagen, **dadurch gekennzeichnet, dass** die Reinigungsflüssigkeit zusätzlich zu einem Mittel zur Sicherstellung eines alkalischen Milieus mit einem pH-Wert von mindestens 10, vorzugsweise 12, Kombinationen von
- einem Mittel, das zur Verhinderung der Ausscheidung von Erdalkalicarbonaten mit Erdalkali-Ionen in Wasser gelöste Komplexe bildet, vorzugsweise anorganische oder organische Komplexbildner wie EDTA (Ethylendiamintetraessigsäure),
- einem Katalysator zur Zersetzung von anorganischen Peroxiden, sowie
- einem Mittel zur Verminderung der Oberflächenspannung des Wassers, vorzugsweise nicht-schäumende und alkalibeständige Tenside
enthält, die mit dem Mittel zur Sicherstellung eines alkalischen Milieus eine erste Komponente bilden, und wahlweise eine zweite Komponente enthaltend wasserlösliche anorganische Peroxide, vorzugsweise Wasserstoffperoxid (H₂O₂), enthält.

10. Reinigungsflüssigkeit nach Anspruch 9, **dadurch gekennzeichnet, dass** die erste Komponente der Reinigunsgflüssigkeit in der Zusammensetzung
| | |
|---|---|
| KOH: | 0.1 bis 15 Gewichtsprozent (bezogen auf das Gesamtgewicht der ersten Komponente), vorzugsweise 2.5 Gew% |
| EDTA-Natriumsalz: | 0.05 bis 5 Gewichtsprozent (bezogen auf das Gesamtgewicht der ersten Komponente), vorzugsweise 3 Gew% |
| Anorganischer Katalysator: | 0.001 bis 0.5 Gewichtsprozent (bezogen auf das Gesamtgewicht der ersten Komponente), vorzugsweise 0.02 Gew%% |
| Nichtschäumende Tenside: | 0.01 bis 2 Gewichtsprozent (bezogen auf das Gesamtgewicht der ersten Komponente), vorzugsweise 0.1 Gew% |
und die zweite Komponente in einer Menge von 0.1 bis 10 Gewichtsprozent (bezogen auf das Gesamtgewicht der zweiten Komponente), vorzugsweise 4 Gew%, zur Anwendung kommt.

## Claims

1. A method for cleaning aerator elements (1) provided with bores or pores in aeration tanks (2) of waste water or water treatment systems, in which the aerator field (4) formed by the aerator elements (1) and the piping (3) connecting the same is subjected to a cleansing liquid which is supplied via additional pipelines such as downpipes (5) which connect the aerator field (4) with a distributing line (6), and a cleansing step is provided in which the aerator field (4) is filled with the cleansing liquid and under pressure conditions which cause the passage of the cleansing liquid through the pores or bores of the aerator elements (1), and the aerator field (4) is emptied again in a further cleansing step after a variable reaction time of the cleansing liquid on the pores or bores of the aerator elements (1), **characterized in that** the cleansing liquid contains an agent for ensuring an alkaline environment with a pH-value of at least 10, preferably 12.

2. A method according to claim 1, **characterized in that** the agent for ensuring an alkaline environment is potassium hydroxide (KOH).

3. A method according to claim 1 or 2, **characterized in that** the cleansing liquid additionally contains combinations of
- an agent which forms complexes dissolved in water with earth-alkaline ions for preventing the formation of alkaline-earth carbonates, preferably inorganic or organic complexing agents such as EDTA (ethylenediaminetetraacetic acid);
- a catalyst for dissolving inorganic peroxides, and
- an agent for reducing the surface tension of the water, preferably non-foaming and alkaline-resistant tensides; which form a first component with the agent for securing an alkaline environment, and optionally a second component containing water-soluble inorganic peroxides, preferably hydrogen peroxide (H₂O₂).

4. A method according to claim 3, **characterized in that** the first component of the cleansing liquid is applied in the composition
| | |
|---|---|
| KOH: | 0.1 to 15 percent by weight (relating to the total weight of the first component), preferably 2.5 percent by weight |
| EDTA sodium salt: | 0.05 to 5 percent by weight (relating to the total weight of the first component), preferably 3 percent by weight |
| Inorganic catalyst: | 0.001 to 0.5 percent by weight (relating to the total weight of the first component), preferably 0.02 percent by weight |
| Non-foaming tensides: | 0.01 to 2 percent by weight (relating to the total weight of the first component), preferably 0.1 percent by weight |
and the second component in a quantity of 0.1 to 10 percent by weight (relating to the total weight of the second component), preferably 4 percent by weight.

5. A method according to one of the claims 1 to 4, **characterized in that** for draining the aerator field (4) the cleansing liquid is discharged via a drainage line (8).

6. A method according to claim 5, **characterized in that** the drainage of the aerator field (4) occurs by the supply of compressed air from a blower (7).

7. A method according to claim 5 or 6, **characterized in that** during the reaction time the supply of the compressed air of the blower (7) to the aerator field (4) is opened briefly.

8. The use of a cleansing liquid, containing an agent for ensuring an alkaline environment with a pH-value of at least 10, preferably 12, for cleansing aerator elements (1) provided with pores or bores in aeration tanks (2) of waste water or water treatment systems.

9. A cleansing liquid for cleansing aerator elements (1) provided with pores or bores in aeration tanks (2) of waste water or water treatment systems, **characterized in that** the cleansing liquid contains in addition to an agent for securing an alkaline environment with a pH-value of at least 10, preferably 12, combinations of
- an agent which forms complexes dissolved in water with earth-alkaline ions for preventing the formation of alkaline-earth carbonates, preferably inorganic or organic complexing agents such as EDTA (ethylenediaminetetraacetic acid);
- a catalyst for dissolving inorganic peroxides, and
- an agent for reducing the surface tension of the water, preferably non-foaming and alkaline-resistant tensides;
which form a first component with the agent for securing an alkaline environment, and optionally a second component containing water-soluble inorganic peroxides, preferably hydrogen peroxide (H₂O₂).

10. A cleansing liquid according to claim 9, **characterized in that** the first component of the cleansing liquid is applied in the composition
| | |
|---|---|
| KOH: | 0.1 to 15 percent by weight (relating to the total weight of the first component), preferably 2.5 percent by weight |
| EDTA sodium salt: | 0.05 to 5 percent by weight (relating to the total weight of the first component), preferably 3 percent by weight |
| Inorganic catalyst: | 0.001 to 0.5 percent by weight (relating to the total weight of the first component), preferably 0.02 percent by weight |
| Non-foaming tensides: | 0.01 to 2 percent by weight (relating to the total weight of the first component), preferably 0.1 percent by weight |
and the second component in a quantity of 0.1 to 10 percent by weight (relating to the total weight of the second component), preferably 4 percent by weight.

## Revendications

1. Procédé pour le nettoyage d'éléments d'aérateur (1) comportant des pores ou des alésages dans des bassins aérés (2) d'installations d'épuration d'eaux usées ou de préparation d'eau, dans lequel l'aire d'aération (4) formée par les éléments aérateurs (1) et les tuyaux (3) qui les relient est exposée à un liquide nettoyant amené par des tuyaux supplémentaires, par exemple des tuyaux de descente (5), qui relient l'aire d'aération (4) à une conduite de distribution (6), et il est prévu une étape de nettoyage dans laquelle l'aire d'aération (4) est remplie du liquide nettoyant dans des conditions de pression qui font passer le liquide nettoyant à travers les pores ou alésages des éléments aérateurs (1) et, dans une autre étape de nettoyage, après un temps variable d'action du liquide nettoyant sur les pores ou alésages des éléments aérateurs (1), l'aire d'aération (4) est à nouveau vidée, **caractérisé en ce que** le liquide nettoyant est un moyen pour assurer un milieu alcalin ayant un pH d'au moins 10, de préférence 12.

2. Procédé selon la revendication 1, **caractérisé en ce que** le moyen pour assurer un milieu alcalin est de l'hydroxyde de potassium (KOH).

3. Procédé selon la revendication 1 ou 2, **caractérisé en ce que** le liquide nettoyant contient en outre des combinaisons :
- d'un moyen formant avec les ions alcalinoterreux des complexes dissous dans l'eau, afin d'empêcher la précipitation de carbonates de métaux alcalinoterreux, de préférence des agents complexants anorganiques où organiques tels que l'EDTA (acide éthylènediamine-tétraacétique),
- d'un catalyseur destiné à décomposer les peroxydes anorganiques, et
- d'un moyen pour réduire la tension superficielle de l'eau, de préférence des tensioactifs non moussants et résistants aux bases,
qui forment avec le moyen pour assurer un milieu alcalin un premier composant, et au choix, un deuxième composant contenant des peroxydes anorganiques hydrosolubles, de préférence du peroxyde d'hydrogène (H₂O₂).

4. Procédé selon la revendication 3, **caractérisé en ce que** le premier composant du liquide nettoyant est mis en oeuvre dans la composition :
| | |
|---|---|
| KOH : | 0,1 % à 15 % en poids (par rapport au poids total du premier composant), de préférence 2,5 % en poids |
| Sel sodique d'EDTA : | 0,05 % à 5 % en poids (par rapport au poids total du premier composant), de préférence 3 % en poids |
| Catalyseur anorganique : | 0,001 % à 0,5 % en poids (par rapport au poids total du premier composant), de préférence 0,02 % en poids |
| Tensioactifs non moussants | 0,01 % à 2 % en poids (par rapport au poids total du premier composant), de préférence 0,1 % en poids |
et le second composant à raison de 0,1 % à 10 % en poids (par rapport au poids total du second composant), de préférence 4 % en poids.

5. Procédé selon l'une quelconque des revendications 1 à 4, **caractérisé en ce que** pour vider l'aire d'aération (4), le liquide nettoyant est évacué par une conduite de vidange (8).

6. Procédé selon la revendication 5, **caractérisé en ce que** la vidange de l'aire d'aération (4) est réalisée par de l'air comprimé envoyé par une soufflante (7).

7. Procédé selon la revendication 5 ou 6, **caractérisé en ce que** pendant le temps d'action, l'arrivée d'air de la soufflante (7) dans l'aire d'aération (4) est brièvement ouverte.

8. Utilisation d'un liquide nettoyant contenant un moyen pour assurer un milieu alcalin à un pH d'au moins 10, de préférence 12, pour le nettoyage d'éléments d'aérateur (1) comportant des pores ou des alésages dans des bassins aérés (2) d'installations d'épuration des eaux usées ou de préparation de l'eau.

9. Liquide nettoyant pour le nettoyage d'éléments d'aérateur (1) comportant des pores ou des alésages dans des bassins aérés (2) d'installations d'épuration des eaux usées ou de préparation de l'eau, **caractérisé en ce que** le liquide nettoyant contient, outre un moyen pour assurer un milieu alcalin à un pH d'au moins 10, de préférence 12, des combinaisons :
- d'un moyen formant avec les ions alcalinoterreux des complexes dissous dans l'eau, afin d'empêcher la précipitation de carbonates de métaux alcalinoterreux, de préférence des agents complexants anorganiques où organiques tels que l'EDTA (acide éthylènediamine-tétraacétique),
- d'un catalyseur destiné à décomposer les peroxydes anorganiques, et
- d'un moyen pour réduire la tension superficielle de l'eau, de préférence des tensioactifs non moussants et résistants aux bases,
qui forment avec le moyen pour assurer un milieu alcalin un premier composant, et au choix, un deuxième composant contenant des peroxydes anorganiques hydrosolubles, de préférence du peroxyde d'hydrogène (H₂O₂).

10. Liquide de nettoyage selon la revendication 9, **caractérisé en ce que** le premier composant du liquide nettoyant est mis en oeuvre dans la composition :
| | |
|---|---|
| KOH : | 0,1 % à 15 % en poids (par rapport au poids total du premier composant), de préférence 2,5 % en poids |
| Sel sodique d'EDTA : | 0,05 % à 5 % en poids (par rapport au poids total du premier composant), de préférence 3 % en poids |
| Catalyseur anorganique : | 0,001 % à 0,5 % en poids (par rapport au poids total du premier composant), de préférence 0,02 % en poids |
| Tensioactifs non moussants | 0,01 % à 2 % en poids (par rapport au poids total du premier composant), de préférence 0,1 % en poids |
et le second composant à raison de 0,1 % à 10 % en poids (par rapport au poids total du second composant), de préférence 4 % en poids.
